# FASCICULE DE BREVET EUROPEEN

(11) **EP 3 352 318 B1**
(45) Date de publication et mention de la délivrance du brevet: **26.02.2020**
(21) Numéro de dépôt: 18152923.1
(22) Date de dépôt: 23.01.2018
(51) Int. Cl.: B64D 47/00, H02J 1/00, H02J 3/14, H02J 5/00, H02J 13/00

(54) **ARCHITECTURE DE COMMUNICATION DE PUISSANCE POUR UN AÉRONEF**
LEISTUNGSKOMMUNIKATIONSARCHITEKTUR FÜR EIN LUFTFAHRZEUG
POWER COMMUNICATION ARCHITECTURE FOR AN AIRCRAFT

(30) Priorité: 24.01.2017 FR 1700064; 13.06.2017 FR 1755301
(43) Date de publication de la demande: 25.07.2018
(73) Titulaire: Zodiac Aero Electric, 93100 Montreuil (FR)
(72) Inventeur: BEGGIORA, Geoffrey, 93100 MONTREUIL (FR)
(74) Mandataire: Casalonga

(56) Documents cités:
- WO-A1-2007/113312
- WO-A2-2011/157834
- FR-A1- 2 907 760

## Description

L'invention concerne une architecture de communication de puissance pour un aéronef susceptible d'embarquer des électroniques de puissance mutualisées et également à un dispositif de distribution électrique pour aéronef comprenant au moins une telle architecture.

La majorité des réseaux électriques des aéronefs, notamment des avions, possèdent un réseau électrique triphasé 115VAC ou 230VAC à fréquence fixe à 400Hz ou variable de 350Hz à 800Hz et un réseau continu 28VDC.

Avec l'arrivée de l'électronique de puissance et de la mécatronique, certaines fonctions réalisées classiquement à l'aide de l'énergie hydraulique ou pneumatique sont maintenant réalisées à l'aide de l'énergie électrique. Pour ce faire, ces équipements s'interfacent avec le réseau triphasé, transforment ce réseau en un bus continu, créant une fonction redresseur, et transforment ce bus continu en un nouveau réseau triphasé contrôlable en tension et en fréquence, créant une fonction onduleur, pour alimenter un actionneur électrique. De plus, des filtres CEM sont installés afin de respecter les normes CEM

Le contrôle de l'actionneur est réalisé par l'électronique de puissance en exécutant classiquement une boucle d'asservissement de courant imbriquée dans une boucle d'asservissement de couple ou de vitesse ou de puissance en fonction de la finalité souhaitée.

Il est connu une architecture de distribution de l'énergie électrique qui consiste à distribuer de l'énergie électrique continu +/-270VDC. Les électroniques de puissance peuvent dans ce cas se passer du redresseur. De plus, cette architecture propose de mutualiser les électroniques de puissance, n'étant jamais toutes utilisées en même temps. Il y a donc moins de boîtiers d'électronique de puissance que d'actionneurs ou de charges électriques. La connexion électrique entre les électroniques de puissance et les charges s'effectue à l'aide d'une matrice de contacteurs distribuant les phases de puissance des électroniques de puissance aux actionneurs ou aux charges.

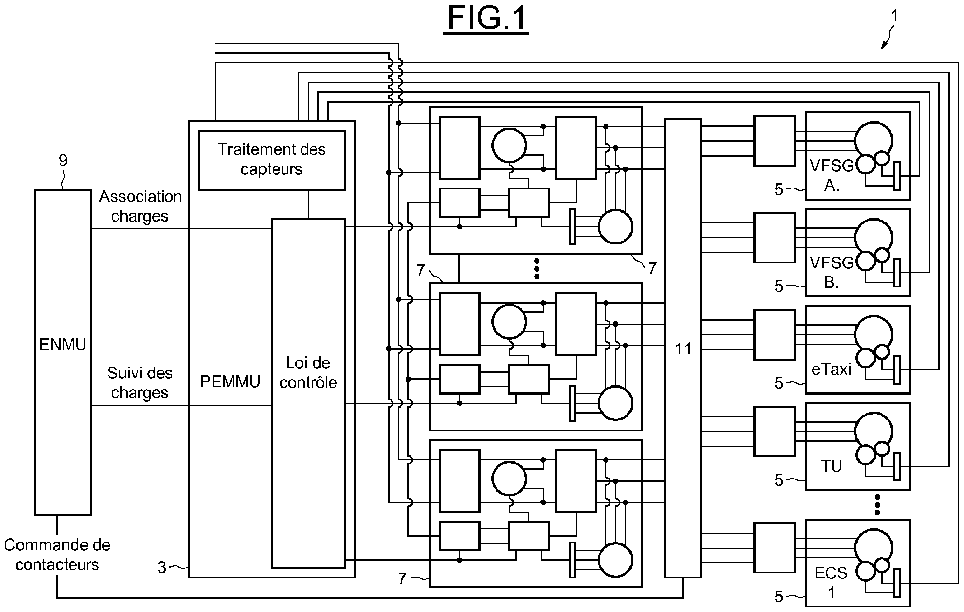

Une telle architecture 1 de communication de puissance pour un aéronef est représentée sur la figure 1. Une carte électronique 3 supportant une unité dite « PEMMU », acronyme pour « Power Electronics Module Management Unit » ou « unité de gestion de module électronique de puissance », effectue l'acquisition des capteurs de toutes les charges 5 et les retransmet en temps réel à des modules électroniques de puissances dits « PEM » 7 qui en ont besoin. Une carte électronique supportant une unité 9 appelée « ENMU », acronyme pour « Electrical Network Management Unit » ou « unité de gestion de réseau électrique », établie l'association module PEM 7/Charge 5, configure la matrice de contacteurs 11 et transmet ces informations à l'unité PEMMU 3. L'unité ENMU 9 transmet également les consignes des charges, telles que les consignes de vitesse, couple, tension. Les modules PEM 7 hébergent chacune toutes les lois de contrôle toutes les charges 5 et exécutent la bonne loi en fonction de l'ordre provenant de l'unité PEMMU 3. Les lois de contrôle se décomposent en deux boucles d'asservissement imbriquées : une boucle rapide contrôlant le courant imbriquée dans une boucle de tension, de couple, de vitesse ou de puissance en fonction de la charge 5, qui émet une consigne de courant vers la boucle de courant.

L'ajout de la matrice de contacteurs 11 est compensé par l'optimisation du nombre de modules PEM 7, ce qui permet de gagner de la masse sur le bilan au niveau de l'aéronef. En outre, l'architecture 1 permet d'augmenter la disponibilité des fonctions critiques car la perte d'une électronique de puissance n'entraîne plus la perte de la fonction.

En revanche, l'architecture de contrôle se complexifie. En termes de contrôle et de commande des actionneurs, il faut que toutes les modules PEM 7 aient accès aux capteurs de toutes les charges 5 et hébergent chacune les lois de contrôle de toutes les charges 5. De plus, plusieurs modules PEM 7 peuvent être amenés à fonctionner en parallèle sur une même charge 5, ce qui implique une communication nécessaire entre les électroniques de puissance.

En outre, les modules PEM 7 doivent intégrer plus d'intelligence, entraînant plus de développement et de problématiques d'intégration. Enfin, le monitoring ou suivi des charges 5 non affectées à un ou plusieurs modules PEM 7 ne peut pas être exécuté.

Il existe donc un besoin d'améliorer le fonctionnement de l'architecture décrite ci-dessus, notamment de simplifier le contrôle de ladite architecture. En outre, on identifiera également ici le document WO 2007/113312 A1.

Selon un premier aspect, l'invention a pour objet une architecture de communication de puissance pour un aéronef comprenant :
- une unité de gestion de module électronique de puissance apte à recevoir des signaux d'entré et à fournir une consigne de courant,
- au moins un module électronique de puissance apte à recevoir ladite consigne de courant,
- au moins une charge commandée par le au moins un module électronique de puissance,
l'unité de gestion de module électronique de puissance stockant des lois de contrôle de la ou des charges permettant d'émettre une consigne de courant en fonction des signaux d'entrée et desdites lois de contrôle, lesdites lois de contrôle de l'unité de gestion de module électronique de puissance intégrant les boucles de courant des modules électroniques de puissance.

Selon des modes particuliers de l'invention, l'architecture de l'invention peut comprendre l'une ou plusieurs des caractéristiques suivantes prises isolément ou selon toutes les combinaisons possibles :
- l'architecture de l'invention comprend une unité de gestion du réseau électrique configurée pour communiquer avec l'unité de gestion de module électronique de puissance et pour établir l'association module électronique de puissance et charge ;
- l'architecture comprend une matrice de contacteur configurée par l'unité de gestion du réseau électrique, ladite matrice de contacteur étant apte à communiquer avec chaque module électronique de puissance et chaque charge ;
- l'unité de gestion du réseau électrique est comprise dans l'unité de gestion de module électronique de puissance ;
- l'architecture de l'invention comprend au moins un capteur de courant configuré pour donner la mesure du courant d'un module électronique de puissance à l'unité de gestion de module électronique de puissance ;
- le au moins un capteur de courant est intégré dans l'unité de gestion de module électronique de puissance ;

Selon un autre aspect, l'invention a également pour objet un dispositif de distribution électrique pour aéronef comprenant au moins une architecture selon l'invention.

Grâce à l'invention, les lois de contrôle sont regroupées dans un seul composant, à savoir l'unité PEMMU, contrairement à l'art antérieur où chaque module électronique de puissance PEM héberge sa propre loi de contrôle. Ainsi, la carte supportant l'unité PEMMU est réalisée par un seul fournisseur ce qui diminue les coûts de développement.

Les interfaces sont également simplifiées et uniformisées puisque la consigne de courant ne transite qu'entre l'unité PEMMU et les modules électroniques de puissance PEM.

L'architecture de communication est également simplifiée puisque les bus de parallélisation entre les modules PEM sont supprimés.

La phase d'intégration des équipements est simplifiée car il existe une seule interface pour mettre au point les lois de contrôle et il n'est donc plus nécessaire de tester lesdites lois dans tous les modules PEM.

Les modules PEM sont uniformisés et simplifiés.

Le matériel et le logiciel sont mutualisés en intégrant des électroniques de puissance modulaires.

Le monitoring ou suivi des charges peut être effectué en permanence dans l'unité PEMMU même si les charges ne sont pas associées à un ou plusieurs modules PEM. Il n'y a donc plus de charge dormante ce qui améliore la sécurité.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 est un schéma partiel synoptique de l'architecture selon l'art antérieur,
- la figure 2 est un schéma partiel synoptique de l'architecture selon un mode réalisation de l'invention.

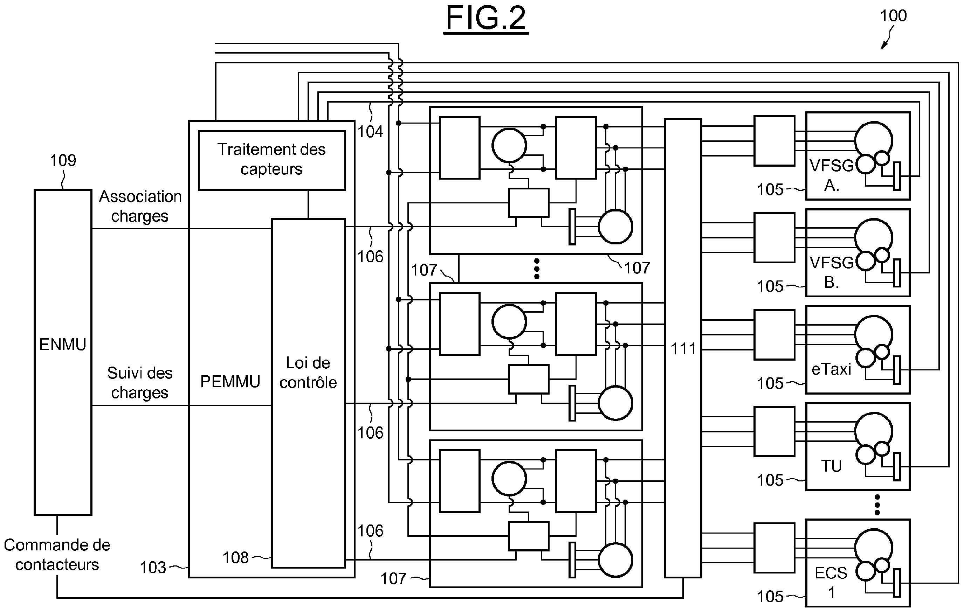

Comme illustré sur la figure 2, l'architecture de communication 100 de puissance selon l'invention comprend :
- une unité de gestion de module électronique de puissance PEMMU 103 apte à recevoir des signaux d'entrée 104 et à fournir une consigne de courant 106,
- au moins un module électronique de puissance PEM 107 apte à recevoir ladite consigne de courant 106,
- au moins une charge 105 commandée par le au moins un module PEM 107.

L'unité PEMMU 103 stocke des lois de contrôle 108 de la ou des charges 105 permettant d'émettre une consigne de courant 106 en fonction des signaux d'entrée 104 et desdites lois de contrôle 108.

Grâce à l'invention, le contrôle de l'architecture 100 est simplifié grâce au regroupement de toutes les lois de contrôle des charges 105 au sein d'un unique composant l'unité PEMMU 103.

Selon le mode de réalisation représenté sur la figure 2, l'architecture 100 comprend une unité de gestion du réseau électrique ENMU 109 configurée pour communiquer avec l'unité PEMMU 103 et pour établir l'association module PEM 107 et charge 105.

L'architecture 100 peut également comprendre une matrice de contacteur 111 configurée par l'unité ENMU 109, ladite matrice de contacteur 111 étant apte à communiquer avec chaque module PEM 107 et chaque charge 105.

L'unité ENMU 109 peut être comprise dans l'unité PEMMU 103.

L'architecture 100 peut comprendre au moins un capteur de courant (non représenté) configuré pour donner la mesure du courant d'un module PEM 107 à l'unité PEMMU 103.

L'unité PEMMU 103 peut intégrer les boucles de courant des modules PEM 107 et envoyer le résultat des boucles de courant à chaque module PEM 107.

Dans le mode de réalisation représenté sur la figure 2, l'unité PEMMU 103 effectue toujours l'acquisition des capteurs de toutes les charges 105 mais ladite unité PEMMU héberge également toutes les lois de contrôle des charges 108. Ladite unité PEMMU 103 reçoit un signal d'entrée, notamment des consignes des charges 105 comme les consignes de vitesse, un couple ou une tension provenant de l'unité ENMU 109, et des données 104 des capteurs des charges 105. Ladite unité PEMMU 103 est apte alors à exécuter les lois de contrôle 108 des charges 105. Ces lois de contrôle 108 génèrent en sortie une consigne de courant 106 qui est envoyée à un ou plusieurs modules PEM concernés. L'unité ENMU 109 établie l'association module PEM 107/Charge 105, configure la matrice de contacteurs 111 et transmet ces informations à l'unité PEMMU 103. Les modules PEM 107 disposent uniquement dans cette architecture de la boucle rapide de courant qui dispose en entrée de la consigne de courant envoyée par l'unité PEMMU 103 et des mesures de courant réalisées directement dans le module PEM 107.

L'architecture 100 de l'invention peut comporter un ou plusieurs bus de communication rapide entre l'unité PEMMU 103 et les modules PEM 107. Lesdits bus permettent d'envoyer la consigne de courant et la position de la charge 105 affectée au module PEM 107 si nécessaire.

Le bus de communication entre les modules PEM 107 est supprimé car la parallélisation des modules PEM 107 peut être gérée directement au niveau de l'unité PEMMU 103 dans les lois de contrôle 108.

L'invention concerne également un dispositif (non représenté) de distribution électrique pour aéronef comprenant au moins une architecture selon l'invention.

## Revendications

1. Architecture de communication (100) de puissance pour un aéronef comprenant :
une unité de gestion de module électronique de puissance (103) apte à recevoir des signaux d'entrée (104) et à fournir une consigne de courant (106),
au moins un module électronique de puissance (107) apte à recevoir ladite consigne de courant (106),
au moins une charge (105) commandée par le au moins un module électronique de puissance (107),
l'unité de gestion de module électronique de puissance (103) stockant des lois de contrôle (108) de la ou des charges (105) permettant d'émettre une consigne de courant (106) en fonction des signaux d'entré (104) et desdites lois de contrôle (108), lesdites lois de contrôle (108) de l'unité de gestion de module électronique de puissance (103) intégrant les boucles de courant des modules électroniques de puissance (107).

2. Architecture (100) selon la revendication 1, comprenant une unité de gestion du réseau électrique (109) configurée pour communiquer avec l'unité de gestion de module électronique de puissance (103) et pour établir l'association module électronique de puissance (107) et charge (105).

3. Architecture (100) selon la revendication 2, comprenant une matrice de contacteur (111) configurée par l'unité de gestion du réseau électrique (109), ladite matrice de contacteur (111) étant apte à communiquer avec chaque module électronique de puissance (107) et chaque charge (105).

4. Architecture (100) selon l'une quelconque des revendications 2 ou 3, dans laquelle l'unité de gestion du réseau électrique (109) est comprise dans l'unité de gestion de module électronique de puissance (103).

5. Architecture (100) selon l'une quelconque des revendications précédentes, comprenant au moins un capteur de courant configuré pour donner la mesure du courant d'un module électronique de puissance (107) à l'unité de gestion de module électronique de puissance (103).

6. Architecture (100) selon la revendication 5, dans laquelle le au moins un capteur de courant est intégré dans l'unité de gestion de 5 module électronique de puissance (103).

7. Dispositif de distribution électrique pour aéronef comprenant au moins une architecture (100) selon l'une quelconque des revendications précédentes.

## Patentansprüche

1. Leistungskommunikationsarchitektur (100) für ein Luftfahrzeug, welche umfasst:
eine Verwaltungseinheit (103) eines Leistungselektronikmoduls, die in der Lage ist, Eingangssignale (104) zu empfangen und einen Stromsollwert (106) zu liefern,
wenigstens ein Leistungselektronikmodul (107), das in der Lage ist, den Stromsollwert (106) zu empfangen,
wenigstens eine Last (105), die von dem wenigstens einen Leistungselektronikmodul (107) gesteuert wird, wobei die Verwaltungseinheit (103) des Leistungselektronikmoduls Steuerungsgesetze (108) für die Last oder die Lasten (105) speichert, die es ermöglichen, einen Stromsollwert (106) in Abhängigkeit von den Eingangssignalen (104) und den Steuerungsgesetzen (108) auszugeben, wobei in die Steuerungsgesetze (108) der Verwaltungseinheit (103) des Leistungselektronikmoduls die Stromschleifen der Leistungselektronikmodule (107) integriert sind.

2. Architektur (100) nach Anspruch 1, welche eine Verwaltungseinheit des Stromnetzes (109) umfasst, die dafür ausgelegt ist, mit der Verwaltungseinheit (103) des Leistungselektronikmoduls zu kommunizieren und die Zuordnung von Leistungselektronikmodul (107) und Last (105) herzustellen.

3. Architektur (100) nach Anspruch 2, welche eine Schaltermatrix (111) umfasst, die von der Verwaltungseinheit des Stromnetzes (109) konfiguriert wird, wobei die Schaltermatrix (111) in der Lage ist, mit jedem Leistungselektronikmodul (107) und jeder Last (105) zu kommunizieren.

4. Architektur (100) nach einem der Ansprüche 2 oder 3, wobei die Verwaltungseinheit des Stromnetzes (109) in der Verwaltungseinheit (103) des Leistungselektronikmoduls enthalten ist.

5. Architektur (100) nach einem der vorhergehenden Ansprüche, welche wenigstens einen Stromsensor umfasst, der dafür ausgelegt ist, den Messwert des Stroms eines Leistungselektronikmoduls (107) an die Verwaltungseinheit (103) des Leistungselektronikmoduls zu übermitteln.

6. Architektur (100) nach Anspruch 5, wobei der wenigstens eine Stromsensor in die Verwaltungseinheit (103) des Leistungselektronikmoduls integriert ist.

7. Stromverteilungsvorrichtung für ein Luftfahrzeug, welche wenigstens eine Architektur (100) nach einem der vorhergehenden Ansprüche umfasst.

## Claims

1. Power communication architecture (100) for an aircraft comprising:
a power electronics module management unit (103) that is capable of receiving input signals (104) and of delivering a current setpoint (106);
at least one power electronics module (107) that is capable of receiving said current setpoint (106);
at least one load (105) that is controlled by the at least one power electronics module (107);
the power electronics module management unit (103) storing control laws (108) for controlling the one or more loads (105) allowing a current setpoint (106) to be transmitted according to the input signals (104) and said control laws (108), said control laws (108) of the power electronics module management unit (103) incorporating the current loops of the power electronics modules (107).

2. Architecture (100) according to Claim 1, comprising an electrical network management unit (109) that is configured to communicate with the power electronics module management unit (103) and to set up the association between the power electronics module (107) and the load (105).

3. Architecture (100) according to Claim 2, comprising a contactor matrix (111) that is configured by the electrical network management unit (109), said contactor matrix (111) being capable of communicating with each power electronics module (107) and each load (105).

4. Architecture (100) according to either of Claims 2 and 3, wherein the electrical network management unit (109) is comprised within the power electronics module management unit (103).

5. Architecture (100) according to any one of the preceding claims, comprising at least one current sensor that is configured to measure the current from a power electronics module (107) to a power electronics module management unit (103).

6. Architecture (100) according to Claim 5, wherein the at least one current sensor is incorporated within the power electronics module management unit (103).

7. Electrical distribution device for an aircraft comprising at least one architecture (100) according to any one of the preceding claims.
